# EUROPÄISCHE PATENTANMELDUNG

(11) **EP 2 957 372 A2**
(43) Veröffentlichungstag der Anmeldung: **23.12.2015**
(21) Anmeldenummer: 15165840.8
(22) Anmeldetag: 30.04.2015
(51) Int. Cl.: B23K 1/00, B23K 1/18

(54) **LÖTVERFAHREN**

(30) Priorität: 16.06.2014 DE 102014211497
(71) Anmelder: Siemens Aktiengesellschaft, 80333 München (DE)
(72) Erfinder: Böttger, Bernd, 52064 Aachen (DE); Laux, Britta, 14059 Berlin (DE); Piegert, Sebastian, 03222 Lübbenau (DE); Reinkensmeier, Ingo, 58730 Fröndenberg (DE)

(57) **Zusammenfassung**

Die Erfindung betrifft ein Lötverfahren, bei dem die Temperatur der Schmelzphase stetig erhöht wird.

## Beschreibung

Die Erfindung betrifft die Temperaturführung bei einem Lötverfahren.

Zum Hochtemperaturlöten von multikomponentigen Gusslegierungen aus Nickelbasis wie Alloy 247 werden u.a. amorphe Lötfolien mit einer relativ einfachen Zusammensetzung verwendet, da die Herstellung von Lötfolien mit grundwerkstoffähnlicher Zusammensetzung und hinreichendem Gehalt an Schmelzpunkterniedrigern wie B, Si, Ge oder Mn sehr schwierig ist. Die Temperaturführung wird so gestaltet, dass eine isotherme Haltezeit oberhalb der Lötliquidustemperatur eingebaut wird, während der es durch die Diffusion des Schmelzpunkterniedrigers zu einer isothermen Erstarrung des Lötspalts kommt. Das Gefüge, das sich in diesem Fall im Bereich der Lötnaht einstellt, besteht aus zwei Kornreihen, so dass eine Korngrenze in der Mitte der Lötnaht entsteht und somit insgesamt mit einer beeinträchtigten mechanischen Festigkeit zu rechnen ist.

Das Phänomen der Fehlkornbildung innerhalb der Lötspalte ist schon häufig beobachtet worden, konnte aber bislang nicht vollständig erklärt werden, so dass Lösungsansätze zur Vermeidung der Fehlkörner nicht systematisch untersucht werden konnten. Es ist bekannt, dass sich bei Verwendung multikomponentiger Lote, deren Zusammensetzung näher an den Grundwerkstoff herankommt, eine Kornstruktur ausbilden kann, bei der der gesamte Lötspalt durch ein großes Korn überbrückt wird. Diese Folien sind jedoch momentan nicht mit einer homogenen Zusammensetzung erhältlich. Vielmehr verfügen sie über einen Kern, der keine oder nur geringe Mengen an Schmelzpunkterniedrigern enthält, und eine Hülle, die angereichert an Schmelzpunkterniedrigern ist.

Es ist daher Aufgabe der Erfindung ein Verfahren aufzuzeigen, das die oben genannten Probleme verbessert.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Die Beschreibung stellt nur ein Ausführungsbeispiel der Erfindung dar.

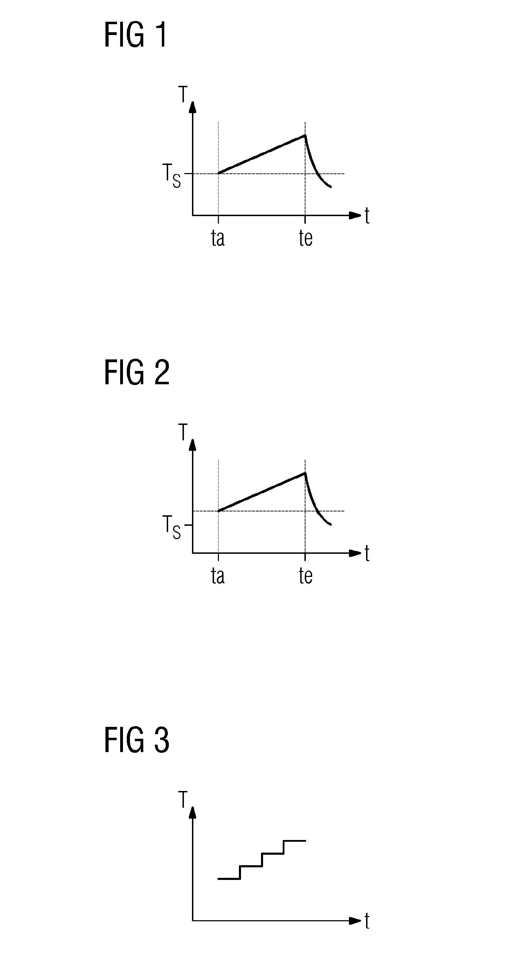

Die Figuren 1, 2 und 3 zeigen Ausführungsbeispiele der Erfindung.

Es wird vorgeschlagen, die Temperaturführung während des Lötvorganges so zu gestalten, dass sich zwischen dem Lötspalt, in dem bei Löttemperatur nahezu 100% flüssige Phase vorliegt, und dem Grundwerkstoff der Komponenten, in dem es durch Diffusion eines Schmelzpunkterniedrigers zu einem inneren Anschmelzen des Grundwerkstoffs kommen kann, keine stabile Grenzschicht ausbilden kann, die beim Aufbrechen zur Bildung von zwei Kornketten innerhalb des Lötspaltes führt. Dabei muss dafür gesorgt werden, dass sich die Fest/Flüssig-Phasengrenze kontinuierlich in Richtung des Grundwerkstoffes bewegt, so dass die Grenzschicht zwischen dem angeschmolzenen Grundwerkstoff und dem flüssigen Lot immer wieder aufgelöst wird.

Dies kann erreicht werden, indem zwischen der Solidustemperatur des Lotes und der Löttemperatur ein Temperaturanstieg stattfindet, der dafür sorgt, dass die Grenzschicht nicht in Richtung des Lötspaltes wächst und somit eine Fehlkornbildung verursacht.

Das Lötverfahren kann bei beliebigen Verbindungsverfahren mit einem Lot zwischen den zu verbindenden Komponenten durchgeführt werden.
Es kann also ein Coupon-Verfahren durchgeführt werden, bei dem eine Komponente aus demselben oder gleichen Material wie des Substrats, d.h. der anderen Komponente besteht und mittels eines Lots zusammengefügt wird. Ebenso kann der Coupon eine andere Zusammensetzung als das Substrat aufweisen.

Ebenso kann das Verfahren verwendet werden, um PSP-Elemente, solche sogenannten vorgesinterten, vorgeformten Elemente einer Mischung aus Basismaterial und Lotmaterial, auf einem Substrat aufzubringen.

Diese Auflistung der Art der zu verbindenden Komponenten ist nicht abschließend.

Das Verfahren wird insbesondere dann durchgeführt, je näher die Solidustemperaturen der zu verbindenden Komponenten und der des Lotes aneinander liegen.
Dies ist insbesondere bei Nickelbasis- oder Kobaltbasis-Superlegierungen der Fall.

Figur 1 zeigt ein erstes Temperaturzeitdiagramm des Lötvorgangs, bei dem der Lötvorgang bei dem Zeitpunkt T_{A} beginnt und an einem Endzeitpunkt T_{E} aufhört. Es ist zu erkennen, dass die Temperatur T kontinuierlich und stetig erhöht wird, vorzugsweise bis zum Ende des Lötverfahrens und danach die Temperatur abklingt und der Lötvorgang damit abgeschlossen ist.

Vergleichbares offenbart die Figur 2, wobei die stetige und kontinuierliche Erhöhung oberhalb der Solidustemperatur T_{ZS} beginnt.

Anstatt einer kontinuierlichen und stetigen Erhöhung kann auch eine schrittweise kontinuierliche Erhöhung gemäß Figur 3 stattfinden. Die Art der Erhöhung gemäß Figur 3 kann auf Figur 1 und Figur 2 übertragen werden.

## Patentansprüche

1. Verfahren
zum Verbinden zumindest zweier Komponenten mittels eines Lot,
insbesondere zweier metallischer Komponenten,
bei dem zwischen den Komponenten das Lot vorhanden ist, das eine Solidustemperatur aufweist,
**dadurch gekennzeichnet, dass**
die Temperatur während des Lötens der Komponenten, ausgehend von der Solidustemperatur des Lots oder ausgehend oberhalb der Solidustemperatur des Lots erhöht wird.

2. Verfahren nach Anspruch 1,
bei dem die Temperatur stetig erhöht wird.

3. Verfahren nach einem oder beiden der Ansprüche 1 oder 2, bei dem die Temperatur bis zum Ende des Lötverfahrens erhöht wird.

4. Verfahren nach einem oder mehreren der Ansprüche 1, 2 oder 3,
bei dem Komponenten aus Nickelbasis- oder Kobaltbasis-Superlegierungen miteinander verlötet werden.
